# EUROPEAN PATENT SPECIFICATION

(11) **EP 3 237 331 B1**
(45) Date of publication and mention of the grant of the patent: **19.06.2019**
(21) Application number: 15766198.4
(22) Date of filing: 09.09.2015
(51) Int. Cl.: C01G 19/00, C01G 19/02

(54) **CUPROUS STANNATES AS THERMAL STABILIZERS**
KUPFER STANNAT ALS HITZESTABILISATOREN
STANNATES CUIVREUX EN TANT QUE STABILISATEURS THERMIQUES

(30) Priority: 09.09.2014 GB 201415901; 30.10.2014 GB 201419346
(43) Date of publication of application: 01.11.2017
(73) Proprietor: William Blythe Limited, Accrington, Lancashire BB5 4PD (GB)
(72) Inventor: CASSIDY, David, Manchester Greater Manchester M28 1ZJ (GB); CROSSLEY, David Christopher, Billington Lancashire BB7 9TS (GB); BAMFORD, Andrew, Rochdale Greater Manchester OL12 9PY (GB)
(74) Representative: Abel & Imray
(86) International application number: PCT/GB2015/052599
(87) International publication number: WO 2016/038359

(56) References cited:
- WO-A1-98/55541
- US-A- 5 342 874
- STARNES W H ET AL: "Cone calorimetric study of copper-promoted smoke suppression and fire retardance of poly(vinyl chloride)", POLYMER DEGRADATION AND STABILITY, BARKING, GB, vol. 82, no. 1, 1 January 2003 (2003-01-01), pages 15-24, XP004450526, ISSN: 0141-3910, DOI: 10.1016/S0141-3910(03)00158-7 cited in the application

## Description

The present invention relates to compositions comprising cuprous stannate and the use of cuprous stannates as a thermal stabilising agents, such as for use with combustible materials, particularly with polymers.

Thermal stabilising agents are additives admixed with combustible materials, such as organic polymers and are typically added during materials processing, for example in the production of a polymer masterbatch, so that an article produced from such a modified composition is less liable to degrade thermally, or to the extent that it does degrade thermally it does so less rapidly, with reduced emission of smoke and/or reduced likelihood of ignition. Thermal stabilising agents are widely used with organic polymers. Organic polymers in the present sense relate to polymers having carbon as the predominant (> 50% by weight) element in the backbone of the polymer chain. Examples include poly alkylenes (polyethylene, polypropylene), polyamides (nylons), polyesters (polyethylene terephthalate), poly halides (polyvinylchloride) as representative examples of relevant polymer types. As will be appreciated, additives typically have different levels of effectiveness depending upon the substrate involved, the additives commonly used as thermal stabilising agents therefore tend to ascribed different functions. For example, some additives may act as flame retardants, others as smoke suppressants and yet others as polymeric stabilisers. A polymeric stabiliser acts to reduce polymer degradation below a point of combustion but will not necessarily be effective once combustion is initiated. A smoke suppressant acts to reduce smoke production but in doing so may simply create more gaseous products, some of which may be combustible. Aflame retardant acts to inhibit, suppress, or delay the production of flames so as to prevent the spread of fire. In reducing flame production, by retarding flame initiation, it may divert decomposition products into other volatiles or smoke.

A wide range of flame retardant materials are known, for example, minerals such as aluminium hydroxide, organo-halogen compounds such as chlorinated alkanes and organophosphorus compounds such as triphenyl phosphate. As will be appreciated, when halogen and phosphorus-containing compounds do actually volatilise the resulting products are relatively toxic. Similarly, antimony trioxide is widely used as it is an effective flame retardant, although with no smoke suppression action and acts as a source of undesirable antimony in the environment.

Smoke suppressants are evaluated by their providing a reduction in the optical density of smoke produced and the time taken for a given composition at a given temperature to produce smoke. Example smoke suppressants include ammonium octamolybdate and molybdenum oxide. However, acute exposure to molybdenum has negative health effects. Similarly to flame retardants, smoke suppressants and flame retardants act once significant decomposition on approaching combustion is taking place and do not necessarily inhibit substrate, for example polymer, degradation below such temperatures.

Polymer stabilisers come in many forms and a subsection of these relate to polymer stabilisation at elevated temperatures relevant to combustion. One mode of action of a polymer stabiliser is an antioxidant, a specific example being the benzofuranones, which reduce oxidation from acts of atmospheric oxygen. Other modes of action of polymer stabilisers are to reduce degradation by chain breakage and cross-linking. Such degradation mechanisms serve to reduce polymer strength and reduce polymer flexibility. Such polymer thermal stabilisation can be useful both in polymer processing and in a finished polymer article, either in normal use or under more extreme conditions as a prelude to combustion. An examples of a materials that falls in this class are pentadecylphenol and dioctadecyl thiodipropanoate. Materials in this general class tend to be organic and hence on eventual combustion provide a further source of combustible material even if they may hinder the onset of that combustion.

Whilst the various thermal stabilising agents in the form of flame retardants and smoke suppressants can vary in effectiveness between substrates, such as polymer types, particularly those additives acting at or near combustion, they are generally not substrate, e.g. polymer specific as they are generally inhibiting free radical reaction pathways and the primary structure of the substrate, e.g. a polymer chain, may already be severely compromised and bear little relation to its original structure at the temperatures when the stabilising agents begin to act. The skilled person using polymeric additives therefore expects to find additives effective across polymer types but each additive having limited functionality, hence the various named classes of additive mentioned above.

A further class of thermal stabilising additive are additives to increase heat loss. In applications, such as the encapsulation of electronics components, particularly using polymers, it is desirable that any polymer encapsulant will dissipate heat effectively, so as to prevent or forestall an increase in temperature to a level at which polymer degradation may occur, and hence the polymeric stabilisers, flame retardants and smoke suppressants will act. An effective component for this function as a heat dissipating additive is carbon black which enhances heat loss and heat conduction by radiation from many polymers. This component however does not add to the structural integrity of a polymer and is itself combustible and can conduct electricity - which can itself be undesirable in some applications.

There is a general need for wide spectrum thermal stabilising agents, particularly when the substrate is a polymer where physical characteristics of the polymer - such as strength and elastic modulus elasticity - are key to material use. A wide spectrum thermal stabilising agent being capable of providing several of the functions mentioned previously, so preferably 2, 3, 4, 5 or all of flame retardancy, smoke suppression, polymeric stabilisation, antioxidant, polymer stabiliser and heat loss enhancement. Such an additive has a potential to reduce formulation complexity and increase weight effectiveness since one material can perform several functions. In particular, it may be that, for example, between a polymeric stabiliser, flame retardant, smoke suppressant and heat dissipating additive the total of additive in a given substrate, such as a polymer may be several percent of the total weight of the composition. Since the primary properties of a substrate are usually chosen for their end use such as strength or flexibility, the addition of such additives which rarely have the same properties should be kept to a minimum. Should it be possible to provide an additive having multiple effects then, at any given stage in a heating profile going from heat dissipation to polymeric stabilisation to smoke suppressing and flame retardancy, there will be more additive available at any given stage in the degradation process for a given weight of additive.

Such a wide spectrum thermal stabilisation additive will preferably enable the compounding of different compositions, e.g. polymer types without having to change the stabilising agent.

There is also a general need for additives having one or more of the functions mentioned above which do not themselves contribute towards the combustible mass of a polymeric article.

There is also general need for additives having one or more of the functions mentioned above which do not contain elements having toxic combustion products, such as the halide elements, sulphur, phosphorus and molybdenum.

A further requirement of the additive is that it is non-toxic and environmentally acceptable. For example, a well-known and widely used in inorganic additive for organic polymers is antimony trioxide. This, however, is no longer considered to be environmentally acceptable.

It is also preferential that any additive should itself not reduce the physical properties, such as strength and flexibility of a polymer with which it is admixed.

Zinc stannates in the form of zinc stannate and zinc hydroxy stannate are known stabilisers and act to extinguish flames in the gas phase and prevent the formation of smoke and toxic gas in the solid phase. The hydroxy stannate also dehydrates at 180°C; releasing water vapour into the flame plasma and extracting heat from the flame zone thus having a heat dissipation effect. Such materials are sold under the Flamtard ® name.

The zinc hydroxy stannate materials are normally used as a white powder and as such this does not itself promote heat dissipation by radiation. They also not known to act as antioxidants, such as exemplified by polymeric stabilisation. Further, whilst zinc stannate is effective as a flame retardant and smoke suppressant, it works best in conjunction with halogenated and organo- phosphorus additives which have their own negatives, such as mentioned above. The use of metal hydroxide is for flame and smoke retardancy is disclosed in CN103450544 for polyolefins.

There is therefore an ongoing need for thermal stabilising agents, such as for polymers. That need extends to materials having wide spectrum composition applicability, such as for various polymer types. That need also extends to additives for giving thermal stabilisation either as polymer stabilisers or heat dissipation additives. Naturally, an additive which combines effects from across the full spectrum of thermal additive functions would be even more preferable and help satisfy a longstanding need in the industry.

Cuprous stannate Cu₂SnO₃ is a known material. The material has been suggested for use as an algicide in US 5,356,664 for use in asphalt shingles. Asphalt is a combustible material and comprises high molecular weight, non-polymeric organic compounds comprising saturated hydrocarbons, polycyclic aromatic compounds, such as napthalenes and phenols. WO02007/106242 also discloses cuprous stannate as a biocide for incorporation in a biocide polymeric coating for use in building materials.

Cuprous relates to copper in the +1 oxidation state, with cupric relating to copper in the +2 oxidation state. Hence, a related but chemically quite different material cupric stannate CuSnO₃, which can be thought of as the copper analogue of zinc stannate mentioned above, has been disclosed in tests to determine smoke depression/suppression in polyvinylchloride as disclosed in Starnes et al, ": colorimetric study of copper-promoted smoke depression and fire retardants of poly (vinyl chloride)", 82 (2003), pages 15-24. This document found no particular benefits for cupric stannate in comparison to related copper salts.

The present invention in its various aspects is as set out in the appended claims.

The present invention claims cuprous stannate (Cu₂SnO₃.xH₂0), wherein x is 1, 2 or 3 (i.e. cuprous hydroxy stannate).

The present invention claims the use of cuprous stannate (Cu₂SnO₃.xH₂0), wherein x is 0, 1, 2 or 3 or a mixture thereof as a thermal stabiliser (i.e. a thermal stabilising agent).

The present invention claims the use of cuprous stannate (Cu₂SnO₃.xH₂0), wherein x is 0, 1, 2 or 3 or a mixtures thereof for thermal stabilisation in a composition comprising a, preferably combustible, material, wherein the material is not asphalt or is not a polymeric coating.

The prior disclosure of cuprous stannate in asphalt and related materials in WO2007/106242 is an accidental disclosure for the purposes of the present invention in that the material is mentioned for a completely different purpose as an algaecide at an unspecified level.

In relation to all of the above:
X may be 3 for more improved heat loss from dehydration.
X may be 1 or 2 to provide avoid loss of mechanical strength at lower temperatures. Whilst not wishing to be bound by theory is understood that the last 2 waters of hydration are held less more tightly and are only lost at higher temperatures. Hydrated forms are more useful as thermal stabilising agents as they are able to loose water of hydration and hence provide a cooling effect by from dehydration upon heating.

X may be 0 (the known anhydrous form) for more improved heat loss by radiation. Whilst not wishing to be bound by theory it is understood to result from the material being dark in colour.

X may be a mixture of 0, 1, 2 and 3, this provides a material form with lower abrasivity, applications include plastics extrusion in which extrusion equipment abrasion, such as of an extruder screw and nozzle can be reduced. This is particularly beneficial in injection moulding and even more so where high thermal stabiliser (greater than 30%) masterbatch is used as masterbatch can act as grinding paste until is properly homogenised. Whilst not wishing to be bound by theory it is understood to result from reduced crystallinity of this mixture. This is also so for a mixture of anhydrous and trihydrate.

As mentioned in the preamble, the mechanisms of action of flame retardants and smoke suppressants whilst varying from polymer to polymer are often relatively generic as they may arise from free radical suppression and char formation. They therefore generally have is broad-spectrum activity with organic polymers. Cuprous stannate has also been found to also provide such broad-spectrum activity and has a significant advantage, unlike many of the known thermal stabilisation additives by providing both flame retardancy and smoke suppression. In its anhydrous and hydrated forms it is black to dark orange black and has been found to provide improved thermal stabilisation by improving heat loss by radiation. The degree of thermal stabilisation is thus further also improved, such as when use as a packaging material for a heat dissipating device, such as (and preferably) an integrated circuit.

The composition, such as a combustible material, may comprise from 0.01 to 30% cuprous stannate for use as a thermal stabilising agent, preferably from 1 to 15% cuprous stannate, more preferably from 2 to 5% cuprous stannate. These levels incorporation give rise to identifiable levels of thermal stabilisation, such as in polymer compositions. The composition is preferably a polymer composition.

The, preferably combustible, material composition may comprise a polymer, the polymer may be an organic polymer. The organic polymer is preferably selected from poly alkylenes (for example polyethylene, polypropylene), polyamides (for example nylon), polyesters (for example polyethylene terephthalate, polybutylene terephthalate), poly halides (for example polyvinylchloride and PTFE) or mixtures thereof, polycarbonates, polystyrenes, butadienes, and mixtures thereof. Preferred organic polymers are Acrylonitrile butadiene styrene rubber (ABS), Nylon 6, Nylon 6-6, Polybutylene terephthalate, Polycarbonates, Polyetheretherketone, Polyetherketone, Polyethylene terephthalate, Polyimides, Polyoxymethylene plastic, Polyphenylene sulphide, Polyphenylene oxide, Polysulphone (PSU), Polytetrafluoroethylene (PTFE / Teflon) and Ultra-high-molecular-weight polyethylene (UHMWPE / UHMW). These materials are preferred as they provide a combination of good engineering properties and particularly improved good thermal stability in combination with cuprous stannate as a preferred base from which to provide enhanced stability by means of the present invention. The most preferred polymer is PVC, cuprous stannate provides notably enhanced thermal stability in the presence of cuprous stannate.

For incorporation into polymers the cuprous stannate is preferably provided in the form of a masterbatch comprising from 30 to 70% cuprous stannate in admixture with a thermoplastic polymer. A masterbatch is a concentrated polymer/additive mix. Suitable thermoplastic polymers are polyethylene, polypropylene, polystyrene and polyvinylchloride. Such masterbatch materials have limited physical strength but serve to provide a convenient mechanism by which the material may be added into a polymeric article production process, such as thermal extrusion.

In a further aspect of the present invention there is provided a masterbatch comprising cuprous stannate (Cu₂SnO₃.xH₂0) and an organic polymer, wherein X is 0, 1, 2 or 3 and the cuprous stannate is present at a level of 30% to 70% by weight in the masterbatch. Inclusion above 70% is undesirable as this gives poor physical properties for the masterbatch. Inclusion at a level below 10% provides additive dilution such that the material would not normally be considered a masterbatch to the extent that it would be suitable for use as an additive in further polymer processing.

Cuprous stannate has been found with several polymers to act as a thermal (polymeric) stabiliser so as to preserve polymer mechanical properties such as tensile strength and stability under conditions where thermal degradation of those properties normally occurs. Cuprous stannate is effective for PVC thermal stabilisation. Cuprous stannate is effective for vinyl thermal stabilisation. Cuprous stannate is effective for butyl rubber stabilisation. Cuprous hydroxy stannate is the preferred stabiliser for these uses and compositions as it provides greater thermal stabilisation for a given heat input and hence can delay the onset of thermal degradation of a composition of which it is part. It is anticipated that since the mode of action is thought to be related to the oxidation of cuprous to cupric and to free radical inhibition the effects will be realised across organic polymers as a class. Similarly the effect of coloration on heat loss will similarly be of general applicability.

Furthermore, cuprous stannate has been found, when used on an equal weight basis to a combination of thermal stabilisers, to give a comparable level of stabilisation across flame, smoke, thermal stabilisation and heat loss as compared to a cocktail of single effect additives. This has the advantage of simplified polymer processing as only one thermal stabilisation component need be added. This advantage is very significant in polymer processing since each additive is normally provided into a polymer mix by means of adding a masterbatch. A disadvantage with each additional component is that each component brings with it an additional amount of the base polymer as a carrier. Hence, it is quite possible that by adding four or five additives a ceiling is reached as to the total amount of additives that can be included (many masterbatches require a minimum polymer content to provide their physical integrity on handling). For example, if it is wished to add 30% of additives, each additive being present at a level of 20% in its relevant masterbatch then 30% inclusion would simply not be possible. Cuprous (hydroxyl) stannate therefore provides a more effective additive for the polymer formulator, such as by enabling thermal stabilisation whilst leaving formulation space for other masterbatch additives, such as plasticisers.

The polymer composition preferably comprises the polymer as a continuous phase. This improves homogeneity of incorporation and more effective functional performance of the cuprous stannate. The polymer composition is preferably a solid at 20°C. The relatively high density of cuprous stannate leads to settling when present in liquid polymers. When adding cuprous stannate into a masterbatch or bulk polymer the method is preferably carried out at a temperature above the glass transition temperature of the organic polymer. This gives rise to homogeneous mixing. When the organic polymer does not exhibit a glass transition temperature, the method is preferably carried out using a precursor of the final polymer, for example in the form of oligomer. A preferred polymer type for compositions of the present invention is a thermoplastic organic polymer.

In a further aspect of the present invention there is provided a method of mixing cuprous stannate (Cu₂SnO₃.xH₂0), wherein x is 0, 1, 2 or 3, and a thermoplastic organic polymer. The method comprises the steps of heating a thermoplastic organic polymer above its glass transition temperature and adding powdered cuprous stannate to the polymer at between 10 and 70 weight percent. The glass transition temperature of a thermoplastic organic polymer is readily determined by the person skilled in the art using differential scanning calorimetry, such as at heating rate of 10°C min⁻¹, using a midpoint of inflection. Thermoplastic polymers enable convenient mixing of the cuprous stannate, preferably in particulate form. An advantage of the cuprous stannate is that it is thermally stable at temperatures typically used in manufacturing processes using thermoplastic polymers, such as injection moulding.

In a further aspect of the present invention there is provided a method of cuprous stannate introduction into a thermosetting polymer. The polymer is admixed with the polymer precursor or precursors before the thermosetting takes place, such as to form a three dimensional polymer matrix. Due to the density of the cuprous stannate, admixture with any liquid precursor is with a shear thinning, preferably viscoelastic precursor.

The cuprous stannate used in the present invention is preferably in a hydrated form, i.e. where X is 1, 2 or 3. Cuprous stannate which on analysis has a higher level of (i.e. unbound) water, such as would result from synthesis without suitable drying, is disadvantageous as water above the equivalent of three waters of crystallisation is loosely bound and is lost at about 95°C. This makes the material generally unsuitable for incorporation in thermoplastics and incorporation in other plastics (i.e. polymers) as it provides usually undesirable unbound water. All the water associated with the cuprous stannate is preferably present as bound water of crystallisation, i.e. water that the skilled person would understand is represented using the formula Cu₂SnO₃.xH₂0.

A preferred cuprous stannate used in the present invention is in the hydrated form wherein X = 3. This may be represented by the formula Cu₂Sn(OH)₆. This hydrated form is more endothermic than the other forms in that it loses water at a temperature of around 273°C and thus has a cooling effect, so as to reduce heat content of a polymer at or above that temperature. The scheme is as follows:

CU₂Sn(OH)₆ → ^{Heat} → Cu₂SnO₃.2H₂0 → ^{Heat} → Cu₂SnO₃.1H₂0 → ^{Heat} → Cu₂SnO₃ (I)

The cuprous stannate (Cu₂SnO₃.xH₂0) is preferably in particulate form. This provides a higher surface area and enhanced thermal stabilisation of the polymer. It does not necessarily enhance smoke suppression by reducing particle size.
The particulate form of the cuprous stannate (Cu₂SnO₃.xH₂0) is preferably in the size range 10µm to 1mm, preferably in the size range 50µm to 100µm. This provides effective dispersal of particles when admixed in a composition, such as with a polymer so as not to trap air and to give homogeneous distribution and hence effective thermal stabilisation.

The cuprous stannate (Cu₂SnO₃.xH₂0) is preferably present in a polymer composition in a ratio of between 0.01% and 10% by weight, when used as a finished product in which the thermal properties of the additive are to be expressed (i.e. as opposed to an intermediate, such as a masterbatch in which the additive is intended to demonstrate its properties in a further, finished product). Whilst other components may be present it is understood that it is predominantly ratio between the organic polymer and the additive which determine stabilisation. A more preferred rate weight ratio is between 0.1% and 5%. The higher limit provides a level at which physical properties of an organic polymer are generally not negatively influenced and the low-level a level at which significant benefit starts to be seen from the additive. A more preferred weight ratio is between 0.5% and 2%, this giving an optimum balance of thermal stabilisation and undiminished polymer physical properties.

A particularly advantageous property of cuprous stannate (Cu₂SnO₃.xH₂0) is that the compositions are darkened by its incorporation, typically appearing black or dark brown. Measurements have demonstrated that radiative heat loss from polymers is enhanced by its incorporation. This is particularly so compared to antimony trioxide and zinc stannate. Results are comparable to carbon black, but cuprous stannate also provides the thermal stabilising effects mentioned while carbon black is itself combustible. Hence, in applications such as the packaging of integrated circuits, even when properties such as flame retardancy and smoke suppression for a given organic polymer composition may be of marginal benefit, the use of the additives of the present invention enables improved heat loss for a given level of additive. This benefit can also be seen in automotive applications in devices where heat is generated.

A particularly advantageous property of cuprous stannate (Cu₂SnO₃.xH₂0) is the thermal stabilisation of organic polymers with which it is admixed. Unlike comparative material such as antimony trioxide and zinc stannate cuprous hydroxy stannate (Cu₂Sn(OH)₆) and anhydrous cuprous stannate (Cu₂SnO₃) serve at equivalent temperatures, to reduce polymer degradation as measured by loss in tensile strength and flexibility.

A further advantageous property of cuprous stannate (Cu₂SnO₃.xH₂0) is flame retardancy in conjunction with organic polymers with which it is admixed.

Another advantageous property of cuprous stannate (Cu₂SnO₃.xH₂0) is smoke suppression in conjunction with organic polymers with which it is admixed.

The present invention also provides methods for the synthesis of cuprous stannate. The synthetic pathway is as follows: Reaction Scheme to Cuprous Stannate

CuO + 2HCl → CuCl2 + H₂O (II)

CuCl₂ + Cu → 2CuCI (III)

CuCI + HCI → HCuCl₂ (IV)

Na₂Sn(OH)₆ + 2HCuCl₂ → Cu₂Sn(OH)₆ + 2HCl + 2NaCl (V)

Hence, the present invention provides a method of synthesising cuprous stannate, the method comprising the step:
iv) providing a sodium stannate solution and mixing it with the hydrocuprochloric acid to produce cuprous stannate.

The method may also provide a precursor step:
iii) mixing the copper (II) chloride solution with copper metal to form hydrocuprochloric acid:
The method may also provide further precursor steps:
i) providing copper (II) oxide:
ii) treating the copper (II) oxide with concentrated hydrochloric acid to form copper (II) chloride in solution:

The above method provides a means to synthesise cuprous stannate in high, greater than, 90% yield.

The method may also preferably, but separably, comprises the additional steps:
ia) providing the copper (II) oxide in powder form;
iiia) providing the copper metal in powder form;
   and/or
v) after providing a sodium stannate solution and mixing it with the hydrocuprochloric acid to produce cuprous stannate, increasing the pH of the resulting solution to a pH of greater than 5; and then vi) separating the cuprous stannate by filtration.

The above steps facilitate the efficient performance of the reaction to reduce the time required to carry out the method.

The method may also comprises the additional dehydration step:
ii) heating isolated cuprous stannate (x = 3) to 110°C until constant weight is achieved (x = 0).

The term, in powder form, refers to material present in particulate form of particle size of 2 mm or below.

The present invention will now illustrated by the following example:

### Synthesis of cuprous stannate

The following reagents were provided for the purposes of synthesising approximately 100g of Cu₂SnO₃.3H₂0, alternatively written as Cu₂Sn(OH)₆.
22.9g of CuO in powder form, particular size around 100µm.
25.0g of Cu, copper metal, (representing an excess over the theoretical at 18.3g).
225g of HCI (36% w/w), representing an excess over theoretical at 92g) and 455g of Na₂Sn(OH)₆.

### Method

Slurry 22.9 g of copper oxide in 100 ml of deionised water. Charge 225 g HCI (36% w/w) to the slurry with mixing over a period of 20 minutes. Charge 25 g of finely divided copper metal into the resulting composition over a period of 10 minutes. Heat the further composition 80°C with agitation until the solution changes from green to a colourless/yellow/brown solution, taking approximately 20 minutes. Filter the resulting cuprous chloride solution to remove the excess copper.

Agitate the filtered cuprous chloride solution with an overhead stirrer whilst adding the sodium stannate solution over a period of 2 hours. Subsequently increase the pH to pH>12 with NaOH and continue to agitate for 30 minutes. Decrease the pH to 7 with HCI (36% w/w) over a period of X minutes and then filter off the Cuprous Stannate product. Wash with deionised water (500ml) and dry in a vacuum oven at 50°C (?) to provide 100g of Cuprous Stannate in the form of a dark orange/black powder.

A further method of the invention is as follows:
An alternative synthetic pathway is as follows:
Reaction Scheme to Cuprous Stannate

CuO + 2HNO₃ = Cu(NO₃)₂ + H₂O (1)

2Cu(NO₃)₂ + SnCl₂ + 3H₂O = Cu₂SnO₃ + 2HCl + 4HNO₃ (2)

Any soluble tin (II) and soluble copper (II) compounds can be used and the reaction scheme simplified to:

2Cu²⁺ + Sn²⁺ + 3H₂O = Cu₂SnO₃ + 6H⁺ (3)

Hence, the present invention also provides a method of synthesising cuprous stannate, the method comprising the steps:
Providing a copper nitrate solution and mixing it with the stannous chloride solution to produce cuprous stannate.

The method may also provide a precursor step:
Treating the copper (II) oxide with concentrated nitric acid to form copper (II) nitrate in solution:
The above method provides a means to synthesise cuprous stannate in high, greater than 90%, yield.

The method may also preferably, but separably, comprises the additional steps: Providing the copper (II) oxide in powder form and/or after providing a copper nitrate solution and mixing it with the stannous chloride to produce cuprous stannate, increasing the pH of the resulting solution to a pH of greater than 5; and then separating the cuprous stannate by filtration.

The above steps facilitate the efficient performance of the reaction to reduce the time required to carry out the method.

The method may also comprise the additional dehydration step:
Heating isolated cuprous stannate (x = 3) to 110°C until constant weight is achieved (x = 0).

The term, in powder form, refers to material present in particulate form of particle size of 2 mm or below.
The present invention will now illustrated by the following example:

### Synthesis of cuprous stannate

The following reagents were provided for the purposes of synthesising approximately 100g of Cu₂SnO₃, 54.1 g of CuO in powder form, particular size around 100µm, 142.8 g of HNO₃ (60% w/w), 215.1 g SnCl₂ solution (30% w/w).

### Method

Prepare a slurry 54.1 g of CuO powder in 100 ml of deionised water. Charge 142.8 g HNO₃ (60% w/w) to the slurry with mixing over a period of 20 minutes. Optionally filter the resulting cupric nitrate solution to remove any impurities. Agitate the filtered cupric nitrate solution, for example with an overhead stirrer, whilst adding the stannous chloride solution over a period of 2 hours. Subsequently increase the pH to pH>12 with NaOH and continue to agitate for 30 minutes. Decrease the pH to 7 with HCI (36% w/w) over a period of 20 minutes and then filter off the Cuprous Stannate product. Wash with deionised water (500ml) and dry in a vacuum oven at 90°C to provide 100g of Cuprous Stannate in the form of a dark orange/black powder.

### Thermal stabilisation tests

The present invention was evaluated against comparative materials using the following test methods. Where more than one version of a test method may exist than the version of the test method current on 1 August 2014 is the method used. In this document all measures are taken at 20°C and atmospheric pressure unless otherwise stated. The data in the tables below is for Cu₂SnO₃.3H₂0.

### Limiting Oxygen Index - ASTM D2863

The minimum concentration of oxygen that will just support flaming combustion in a flowing mixture of oxygen and nitrogen. A specimen is positioned vertically in a transparent test column and a mixture of oxygen and nitrogen is forced upward through the column. The specimen is ignited at the top. The oxygen concentration is adjusted until the specimen just supports combustion. The concentration reported is the volume percent.

| | Rank, 1 is highest oxygen concentration |
|---|---|
| Antimony trioxide in PVC | 1 |
| Zinc stannate in PVC | 1 |
| Carbon black in PVC | 2 |
| Cuprous stannate in PVC | 1 |

### Flame retardancy UL Flame Rating - UL94 (Underwriters Laboratories)

The UL 94 flame test groups materials into categories based on their flammability. The test as to variations: vertical burn and horizontal burn. Descriptions of these tests as supplied by underwriters laboratories are as follows:
Horizontal Testing (HB)
Procedure: A specimen is supported in a horizontal position and is tilted at 45°. A flame is applied to the end of the specimen for 30 seconds or until the flame reaches the 1 inch mark. If the specimen continues to burn after the removal of the flame, the time for the specimen to burn between the 1 and 4 inch (2.5 and 10cm) marks are recorded. If the specimen stops burning before the flame spreads to the 4 inch (10cm) mark, the time of combustion and damaged length between the two marks is recorded. Three specimens are tested for each thickness.
Vertical Testing (5VA, 5VB)

Testing was performed on both bar and plaque specimens. Procedure for Bars: A bar specimen is supported in a vertical position and a flame is applied to one of the lower corners of the specimen at a 20° angle. The flame is applied for 5 seconds and is removed for 5 seconds. The flame application and removal is repeated five times. Procedure for Plaques: The procedure for plaques is the same as for bars except that the plaque specimen is mounted horizontally and a flame is applied to the centre of the lower surface of the plaque.

| | Horizontal Rank, 1 is lowest flammability | Vertical Rank, 1 is lowest flammability |
|---|---|---|
| Anthony trioxide in PVC | 2 | 1 |
| Zinc stannate in PVC | 1 | 1 |
| Carbon black in PVC | 2 | 2 |
| Cuprous stannate in PVC | 1 | 1 |

### Thermal stability of PVC European Standard EN ISO 182-3 : 2000

Determination of the tendency of compounds and products based on vinyl chloride homopolymers and copolymers to evolve hydrogen chloride and any other acidic products at elevated temperatures, Part 3: Conductometric method.
The principle of the method is followed, a test portion of PCC compound is maintained at elevated temperature in a nitrogen gas stream. The hydrogen chloride evolved due to thermal decomposition of the PVC is absorbed in a given amount of demineralised water. The amount of hydrogen chloride evolved is determined indirectly by a changing conductivity of the water. The greater the changing conductivity of the water the greater the PVC decomposition.

| | Rank, 1 is lowest conductivity |
|---|---|
| Anthony trioxide in PVC | 1 |
| Zinc stannate in PVC | 1 |
| Carbon black in PVC | 2 |
| Cuprous stannate in PVC | 1 |

### Smoke suppression by cone calorimetry

Smoke suppression by cone calorimetry was carried out using UL Fire Safety Engineering Department: - ASTM E 1354 - ASTM D 5485 - CAN/ULC-S135 - ISO 5660-1 - NFPA 271 with the following results.

| | Rank, 1 is lowest smoke |
|---|---|
| Anthony trioxide in PVC | 2 |
| Zinc stannate in PVC | 1 |
| Carbon black in PVC | 3 |
| Cuprous stannate in PVC | 1 |

### Radiative heat loss

This takes a sample of plastics material comprising the additive, elevates it in temperature, within which the plastics material is chemically stable and then monitors the rate of decrease in temperature when the sample is moved into an ambient temperature environment. This provides a measure of the ability of a plastic sample to lose heat, primarily by radiation. Since plastic samples are of a similar physical size and are placed in a similar environment he losses through other factors, such as conduction and convection, whilst minimal, are considered to be substantially equivalent.

### Detailed test method

The relevant additive is compounded into a sample of uncoloured PVC to a level of 10% by weight. A 20 g cube of this material is heated to 150°C over a period of 10 minutes. The cube of material is then placed in the open supported on a 1cm diameter column of 4cm, and at an ambient temperature of 20°C and the time taken for the sample temperature to reduce to 50°C is measured using an infra-red thermometer.

| | Rank, 1 is fastest cooling |
|---|---|
| Anthony trioxide in PVC | 2 |
| Zinc stannate in PVC | 2 |
| Carbon black in PVC | 1 |
| Cuprous stannate in PVC | 1 |

### Mechanical Properties

The relevant additive is compounded into a sample of uncoloured PVC to a level of 10% by weight. Pairs of test specimen of dimensions according to ASTM 8, Sheet type 12.5mm (0.5 inches) wide) were prepared. An initial test was made on one sample and the other was heated to 180°C and after 1 hour at 180°C was cooled rapidly to ambient temperature before testing. The Elastic Modulus change and Tensile strength change as compared on a percentage loss basis for each pair and ranked as tabulated below.

### Sample dimensions

| | Dimensions in cm | Inches Equivalent |
|---|---|---|
| Gauge length | 5cm | 2.00±0.005 |
| Width | 1.27cm | 0.500±0.010 |
| Thickness | 0.635cm | 0.25±0.010 |
| Fillet radius | 0.635cm | 0.25±0.010 |
| Overall length | 20cm | 8 |
| Length of reduced section | 5.7cm | 2.25 |
| Length of grip section | 5cm | 2 |
| Width of grip section | 1.9cm | 0.75 |

Elastic Modulus as a measure of flexibility before heating to 180°C and after 1 hour at 180°C along with Tensile strength shows the benefits of the present invention.

Tensile strength and Elastic Modulus using ISO test method ISO 37.

| | Rank, 1 least loss of Tensile Strength | Rank, 1 least loss of Elastic Modulus |
|---|---|---|
| Anthony trioxide in PVC | 3 | 3 |
| Zinc stannate in PVC | 2 | 2 |
| Carbon black in PVC | 3 | 3 |
| Cuprous stannate in PVC | 1 | 1 |

The above results demonstrate that cuprous stannate is effective as a thermal stabilising agent and is equivalent to or better than established materials and, in, particular displays effective performance over a wide range of materials properties.

### Performance Testing of Cuprous Stannate

Cuprous stannate anhydrous was formulated in PVC at 5 phr. Thermal stability and flame retardant tests were then carried out benchmarking against Zinc Hydroxystannate and Antimony Trioxide. Phr means parts per hundred parts of resin. For example, 5 phr means that 5 kg of an ingredient would be added to 100 kg of resin. The data in the tables below is for Cu₂SnO₃.

The following formulation was used:

| Component | Batch | phr |
|---|---|---|
| PVC RESIN | INEOS (K70) | 100 |
| PLASTICIZER | DIISONONYL PHTHALATE | 65 |
| STABILISER | CHEMSON (PKN65079): Ca-Zn STEARATE | 2 |
| FLAME RETARDANT ADDITIVE (not present in control) | Cuprous Stannate, Antimony Trioxide or Zinc Hydroxystannate | 5 |

### Flame retardant tests

The present invention was evaluated against comparative materials using Limiting Oxygen Index - ASTM D2863 and Flame retardancy UL Flame Rating - UL94 (Underwriters Laboratories). In this document all measures are taken at 20°C and atmospheric pressure unless otherwise stated. The data in the tables below is for Cu₂SnO₃.

### Thermal stabilisation tests

The present invention was evaluated against comparative materials using Thermal stability of PVC European Standard EN ISO 182-3:2000. In this document all measures are taken at 20°C and atmospheric pressure unless otherwise stated. The data in the tables below is for Cu₂SnO₃.

### Limiting Oxygen Index - ASTM D2863

The minimum concentration of oxygen that will just support flaming combustion in a flowing mixture of oxygen and nitrogen. A specimen is positioned vertically in a transparent test column and a mixture of oxygen and nitrogen is forced upward through the column. The specimen is ignited at the top. The oxygen concentration is adjusted until the specimen just supports combustion. The concentration reported is the volume percent.

| Sample | LOI (%) |
|---|---|
| Control, no additive | 23.1 |
| Antimony Trioxide in PVC | 26.8 |
| Zinc Hydroxystannate in PVC | 25.5 |
| Cuprous Stannate in PVC | 28.5 |

### Flame retardancy UL Flame Rating - UL94 (Underwriters Laboratories)

The UL 94 flame test groups materials into categories based on their flammability. The test has two variations: vertical burn and horizontal burn. The vertical burn test was used to assess the performance of cuprous stannate. Description of the test as supplied by underwriters laboratories is as follows:

### Vertical Testing (5VA, 5VB)

Testing is done on both bar and plaque specimens. Procedure for Bars: A bar specimen is supported in a vertical position and a flame is applied to one of the lower corners of the specimen at a 20° angle. The flame is applied for 5 seconds and is removed for 5 seconds. The flame application and removal is repeated five times. Procedure for Plaques: The procedure for plaques is the same as for bars except that the plaque specimen is mounted horizontally and a flame is applied to the centre of the lower surface of the plaque.

| Sample | UL94 Classification |
|---|---|
| Control no FR additive | Fail |
| Antimony Trioxide in PVC | V0 |
| Zinc Hydroxystannate in PVC | V0 |
| Cuprous Stannate in PVC | V0 |

### Thermal stability of PVC European Standard EN ISO 182-3:2000

Determination of the tendency of compounds and products based on vinyl chloride homopolymers and copolymers to evolve hydrogen chloride and any other acidic products at elevated temperatures, Part 3: Conductometric method.
The principle of the method is followed, a test portion of PCC compound is maintained at elevated temperature in a nitrogen gas stream. The hydrogen chloride involved due to thermal decomposition of the PVC it is absorbed in a given amount of demineralised water. The amount of hydrogen chloride evolved is determined indirectly by a changing conductivity of the water. The greater the changing conductivity of the water the greater the PVC decomposition. The stability time is the time taken to reach 50 µS/cm

| Sample | Stability Time (hrs) |
|---|---|
| Control, no additive | 3.12 |
| Antimony Trioxide in PVC | 5.42 |
| Zinc Hydroxystannate in PVC | 3.04 |
| Cuprous Stannate in PVC | 6.59 |

The above tests when conducted with cuprous stannate both as x = 0 and also as x = 3 with high density polyethylene, polyurethane (toluene diisocyanate with dipropylene glycol) and epoxy resin (diglycidyl ether of bisphenol A) giving substantially equivalent results in as much as the cuprous stannate outperformed the control and the Antimony Trioxide and the Zinc Hydroxystannate.

## Claims

1. The use of cuprous stannate (Cu₂SnO₃.xH₂0), wherein x is 0, 1, 2 or 3, or mixtures thereof, as a thermal stabilising agent in a composition.

2. The use of claim 1 wherein the cuprous stannate comprises from 0.01 to 30% of the composition in which it is used as the thermal stabilising agent.

3. The use of claim 1 or claim 2 wherein the composition comprises an organic polymer.

4. The use of claim 3 wherein the organic polymer is PVC.

5. The use of any preceding claim wherein X is 1, 2, or 3 or mixtures thereof.

6. A composition comprising cuprous stannate (Cu₂SnO₃.xH₂0), wherein x is 1, 2 or 3.

7. A composition comprising cuprous stannate (Cu₂SnO₃.xH₂0), wherein X is 0, 1, 2 or 3, for the use of any of claims 1 to 4.

8. The composition of claim 6 wherein the composition does not comprise asphalt or is a not a polymer coating.

9. A composition comprising cuprous stannate (Cu₂SnO₃.xH₂0), wherein x is 0, 1, 2 or 3, the composition comprising an organic polymer.

10. The composition of claim 9 wherein the organic polymer is one or more of polyethylene, polypropylene, polystyrene and polyvinylchloride and epoxy resin or the polymer is selected from polyakylenes, polyamides, polyesters, polyhalides or mixtures thereof, or polycarbonates, polystyrenes, butadienes, and mixtures thereof.

11. The composition of claim 10 wherein the organic polymer is PVC.

12. The composition of any of claims 9 to 11 wherein the composition is a masterbatch wherein the masterbatch comprises 30% to 70% weight and from 70% to 30% cuprous stannate.

13. A method of synthesising cuprous stannate the method comprising the step:
iv) providing a sodium stannate solution and mixing it with hydrocuprochloric acid to produce cuprous stannate.

14. The method of claim 13 having the precursor step:
iii) mixing copper (II) chloride solution with copper metal to form hydrocuprochloric acid.

15. The method of claim 14 having the precursor step:
i) providing copper (II) oxide.
ii) treating the copper (II) oxide with concentrated hydrochloric acid to form copper (II) chloride in solution.

16. The method of claim 15 comprises the additional steps:
ia) providing the copper (II) oxide in powder form;
iiia) providing the copper metal in powder form.

17. The method of any of claim 13 to 16 comprises the additional steps:
v) after providing a sodium stannate solution and mixing it with the hydrocuprochloric acid to produce cuprous stannate, increasing the pH of the resulting solution to a pH of greater than 5; and then
vi) separating the cuprous stannate by filtration.

## Patentansprüche

1. Die Verwendung von Kupfer(I)-stannat (Cu₂SnO₃.xH₂O), wobei x 0, 1, 2 oder 3 oder Mischungen davon ist, als Wärmestabilisierungsmittel in einer Zusammensetzung.

2. Die Verwendung nach Anspruch 1, wobei das Kupfer(I)-stannat 0,01 bis 30% der Zusammensetzung ausmacht, in der es als das Wärmestabilisierungsmittel verwendet wird.

3. Die Verwendung nach Anspruch 1 oder Anspruch 2, wobei die Zusammensetzung ein organisches Polymer umfasst.

4. Die Verwendung nach Anspruch 3, wobei das organische Polymer PVC ist.

5. Die Verwendung nach einem vorhergehenden Anspruch, wobei X 1, 2 oder 3 oder Mischungen davon ist.

6. Eine Zusammensetzung, umfassend Kupfer(I)-stannat (Cu₂SnO₃.xH₂O), wobei x 1, 2 oder 3 ist.

7. Eine Zusammensetzung, die Kupfer(I)-stannat (Cu₂SnO₃.xH₂O) umfasst, wobei X 0, 1, 2 oder 3 ist, zur Verwendung nach einem der Ansprüche 1 bis 4.

8. Die Zusammensetzung nach Anspruch 6, wobei die Zusammensetzung keinen Asphalt umfasst oder keine Polymerbeschichtung ist.

9. Eine Zusammensetzung, die Kupfer(I)-stannat (Cu₂SnO₃.xH₂O) umfasst, wobei x 0, 1, 2 oder 3 ist, wobei die Zusammensetzung ein organisches Polymer umfasst.

10. Die Zusammensetzung nach Anspruch 9, wobei das organische Polymer eines oder mehrere von Polyethylen, Polypropylen, Polystyrol und Polyvinylchlorid und Epoxidharz ist, oder das Polymer ausgewählt ist aus Polyalkylenen, Polyamiden, Polyestern, Polyhalogeniden oder Mischungen davon, oder Polycarbonaten, Polystyrolen, Butadienen und Mischungen davon.

11. Die Zusammensetzung nach Anspruch 10, wobei das organische Polymer PVC ist.

12. Die Zusammensetzung nach einem der Ansprüche 9 bis 11, wobei die Zusammensetzung ein Masterbatch ist, wobei das Masterbatch 30 bis 70 Gew.-% und von 70 bis 30 Gew.-% Kupfer(I)-stannat umfasst.

13. Ein Verfahren zur Synthese von Kupfer(I)-stannat, wobei das Verfahren den Schritt umfasst:
iv) Bereitstellen einer Natriumstannatlösung und Vermischen dieser mit Hydrokupfer(I)-dichlorid, um Kupfer(I)-stannat zu erzeugen.

14. Das Verfahren nach Anspruch 13 mit folgendem vorhergehenden Schritt:
iii) Vermischen einer Kupfer(II)-chlorid-Lösung mit Kupfermetall, um Hydrokupfer(I)-dichlorid zu bilden.

15. Das Verfahren nach Anspruch 14 mit folgendem vorhergehenden Schritt:
i) Bereitstellen von Kupfer(II)-oxid,
ii) Behandeln des Kupfer(II)-oxids mit konzentrierter Salzsäure, um Kupfer(II)-chlorid in Lösung zu bilden.

16. Das Verfahren nach Anspruch 15, umfassend folgende zusätzliche Schritte:
ia) Bereitstellen des Kupfer(II)oxids in Pulverform,
iiia) Bereitstellen des Kupfermetalls in Pulverform.

17. Das Verfahren nach einem der Ansprüche 13 bis 16, umfassend folgende zusätzliche Schritte:
v) nach dem Bereitstellen einer Natriumstannatlösung und dem Vermischen dieser mit dem Hydrokupfer(I)-dichlorid, um Kupfer(I)-stannat zu erzeugen, das Erhöhen des pH-Werts der resultierenden Lösung auf einen pH-Wert von mehr als 5, und anschließend
vi) das Abtrennen des Kupfer(i)-stannats durch Filtration.

## Revendications

1. Utilisation de stannate de cuivre (Cu₂SnO₃.xH₂O), où x vaut 0, 1, 2 ou 3, ou des mélanges de ceux-ci, en tant qu'agent de stabilisation thermique dans une composition.

2. Utilisation selon la revendication 1, dans laquelle le stannate de cuivre comprend de 0,01 à 30 % de la composition dans laquelle il est utilisé en tant qu'agent de stabilisation thermique.

3. Utilisation selon la revendication 1 ou 2, dans laquelle la composition comprend un polymère organique.

4. Utilisation selon la revendication 3, dans laquelle le polymère organique est du PVC.

5. Utilisation selon l'une quelconque des revendications précédentes, où x vaut 1, 2 ou 3, ou des mélanges de ceux-ci.

6. Composition comprenant du stannate de cuivre (Cu₂SnO₃.xH₂O), où x vaut 1, 2 ou 3.

7. Composition comprenant du stannate de cuivre (Cu₂SnO₃.xH₂O), où x vaut 0, 1, 2 ou 3, pour l'utilisation selon l'une quelconque des revendications 1 à 4.

8. Composition selon la revendication 6, la composition ne comprenant pas d'asphalte ou n'étant pas un revêtement polymère.

9. Composition comprenant du stannate de cuivre (Cu₂SnO₃.xH₂O), où x vaut 0, 1, 2 ou 3, la composition comprenant un polymère organique.

10. Composition selon la revendication 9, dans laquelle le polymère organique est un ou plusieurs parmi un polyéthylène, un polypropylène, un polystyrène et un polychlorure de vinyle et une résine époxy ou le polymère est choisi parmi les polyalkylènes, les polyamides, les polyesters, les polyhalogénures ou des mélanges de ceux-ci, ou les polycarbonates, les polystyrènes, les butadiènes et des mélanges de ceux-ci.

11. Composition selon la revendication 10, dans laquelle le polymère organique est du PVC.

12. Composition selon l'une quelconque des revendications 9 à 11, la composition étant un mélange maître, le mélange maître comprenant de 30 % à 70 % en poids et de 70 % à 30 % de stannate de cuivre.

13. Procédé de synthèse de stannate de cuivre, le procédé comprenant l'étape consistant à :
iv) fournir une solution de stannate de sodium et la mélanger avec de l'acide cuprochlorhydrique pour produire du stannate de cuivre.

14. Procédé selon la revendication 13 comprenant l'étape précurseur consistant à :
iii) mélanger une solution de chlorure de cuivre (II) avec un métal cuivre pour former de l'acide cuprochlorhydrique.

15. Procédé selon la revendication 14 comprenant l'étape précurseur consistant à :
i) fournir de l'oxyde de cuivre (II),
ii) traiter l'oxyde de cuivre (II) avec de l'acide chlorhydrique concentré pour former du chlorure de cuivre (II) en solution.

16. Procédé selon la revendication 15 comprenant les étapes supplémentaires consistant à :
ia) fournir l'oxyde de cuivre (II) sous la forme de poudre ;
iiia) fournir le métal cuivre sous la forme de poudre.

17. Procédé selon l'une quelconque des revendications 13 à 16 comprenant les étapes supplémentaires consistant à :
v) après la fourniture d'une solution de stannate de sodium et son mélange avec de l'acide cuprochlorhydrique pour produire du stannate de cuivre, augmenter le pH de la solution résultante à un pH supérieur à 5 ; et ensuite
vi) séparer le stannate de cuivre par filtration.
